# EUROPEAN PATENT SPECIFICATION

(11) **EP 4 234 928 B1**
(45) Date of publication and mention of the grant of the patent: **11.09.2024**
(21) Application number: 22158805.6
(22) Date of filing: 25.02.2022
(51) Int. Cl.: F03D 80/30

(54) **WIND TURBINE ROTOR BLADE AND WIND TURBINE**
ROTORBLATT EINER WINDTURBINE UND WINDTURBINE
PALE DE ROTOR D'ÉOLIENNE ET ÉOLIENNE

(43) Date of publication of application: 30.08.2023
(73) Proprietor: Siemens Gamesa Renewable Energy A/S, 7330 Brande (DK)
(72) Inventor: Nielsen, Mogens, 9220 Aalborg (DK)
(74) Representative: SGRE-Association

(56) References cited:
- EP-A1- 3 511 560
- EP-A1- 3 670 169
- WO-A1-2021/110225
- WO-A1-2022/022789
- CN-A- 108 266 335
- DE-B3- 102011 105 228

## Description

The invention relates to a wind turbine rotor blade comprising a shell, a web structure, and a lightning down conductor arrangement, wherein the rotor blade extends in a spanwise direction between a tip-side end and a root-side end, wherein the web structure is made from at least one fiber-laminate-based structure, wherein the lightning down conductor arrangement comprises at least one web terminal at least partly embedded in the web structure and at least one root-side end terminal arranged in a root-side end portion of the shell in a spanwise distance to the web terminal. Furthermore, the invention relates to a wind turbine rotor blade.

A wind turbine rotor blade may require one or more lightning down conductors to ground lightning strikes which may hit the rotor blade when it is mounted at the hub of a wind turbine, in particular due to the exposed position of the rotor blade. In order to provide such lightning down conductors, it is known to integrate conductive elements in the rotor blade during manufacturing and/or to arrange conductors in the rotor blade after manufacturing. These conductive elements may be arranged for instance in or at the shell of the rotor blade and/or in or at a web structure of the rotor blade.

The lightning down conductors of a rotor blade may for instance be connected to receptors, which may be arranged at the tip, the outer surface or other portions of the shell of the rotor blade. On the root-side end of the rotor blade, a connection occurs to the hub of the rotor blade so that a lightning strike which has hit the rotor blade can be grounded through connected down conductors in the hub and the remainder of the wind turbine.

Therefore, a connection terminal at the root-side end section of the rotor blade has to be integrated into the lightning down conductor system, or connected to the lightning down conductors in the rotor blade, respectively. This may in particular include a connection between a conductor or a corresponding terminal that is arranged on the inboard end of the web structure of the rotor blade and a further terminal at the root-side end of the rotor blade used for connecting the lightning down conductor system in the rotor blade rotor blade to the lighting down conductor system in the hub.

Rotor blades for wind turbines are commonly manufactured using fiber-based material, so that in particular the shell and also the web structure arranged in the shell of the rotor blade may comprise or consist of fiber-laminate-based structures. Electrical conductors used for instance as lightning down conductors may be embedded in the fiber structure during the casting of the rotor blade.

However, depending on the manufacturing method of the rotor blade, the integration of such lightning conductors may be difficult. In particular, within an inboard section of the rotor blade, in particular between the root-wise end of the web structure and the root-side end of the rotor blade, the integration of lightning conductors in the fiber structure of the rotor blade may be tedious and complicated, in particular due to the increased thickness of the fiber structures used for creating the required mechanical stability of the inboard section of the rotor blade.

This may apply in particular for wind turbine rotor blades, which are manufactured in a blade mold from dry sandwiched laminates and/or from preassembled preform elements, which comprise one or more dry fiber layers and/or one or more rigid core components such as balsa wood and/or foam materials already attached to each other prior to their arrangement in the blade mold. Since the conductors have to be integrated between the fiber layers and/or the further components in the blade mold, the arrangement of the conductors may be tedious and difficult, in particular since the dry fiber layers and/or the core components of the preform elements may be untransparent so that the localization and/or arrangement of a conductor to be embedded may be difficult. Furthermore, the integration of the conductor may require one or more cuts through the dry fiber layers in order to rout the conductor properly through the fiber layers prior to the casting process. However, since the conductor may not be recognizable through the untransparent fiber layers, it may be difficult to provide the cuts with the desired precision, in particular when a zig-zag cut pattern with less influence on the mechanical strength of the shell shall be created.

A document representing the prior art is e.g. WO 2022/022789 A1.

It is therefore the object of the invention to provide an improved rotor blade, in particular with an improved electrical connection in an inboard section of the rotor blade. According to the invention, this object is solved by a wind turbine rotor blade as initially described, wherein the root-side end terminal is connected to the web terminal by an end conductor arranged at the inner surface of the shell.

The usage of the end conductor arranged at the inner surface of the shell facilitates providing an electrical connection between the web terminal and the root-side end terminal, in particular since the end conductor may be arranged after casting of the rotor blade, or after casting of the shell and the web structure, respectively. By using the end conductor arranged at the inner surface of the shell, providing an electrical connection within the inboard section of the rotor blade is facilitated, since the electrical connection may be established without the need for integrating the conductor in the rotor blade mold prior to the casting of the rotor blade, or prior to a resin infusion into the fiber layers arranged in a blade mold, respectively.

The end conductor connects in particular a web terminal arranged at or close to the root-wise end of the web structure to the root-end terminal at the root-side end of the rotor blade. The web terminal may be for example the element or one of the elements of the lightning down conductor arrangement which is arranged closest to the root-side end of the blade.

The end conductor is used to provide an electrical connection in particular within the inboard section of the rotor blade. In this respect, the term inboard section refers in particular to the section of the rotor blade between a maximum cord-wise width of the rotor blade and the root-side end of the rotor blade, or to the rotor blade root, respectively.

The inboard section is hence the section of the rotor blade, in which the rotor blade cross-section transforms from an airflow shape at the maximum chord position to a circular cross-section at the root side end of the rotor blade. The circular cross-section at the root-side end of the rotor blade may be required in particular for connecting the rotor blade to a circular hub interface and/or to a circular pitch bearing of a wind turbine hub. The section of the rotor blade between the blade tip and the maximum chord position may be denominated as outboard section of the rotor blade, respectively.

The web terminal and the root-side end terminal are arranged in a spanwise distance, which may for instance be between 5 m and 30 m, in particular between 12 m and 20 m, depending on the total spanwise length of the rotor blade. The spanwise distance is bridged by the end conductor in order to provide an electrical connection between the web terminal of the lightning down conductor arrangement of the rotor blade and the root-side end terminal. By this connection, the root-side end terminal is connected to the lightning down conductor arrangement so that by using the root-side end terminal, a connection of the lightning down conductor arrangement to further lightning conductor structures in the wind turbine is possible.

The usage of the end conductor arranged at the inner surface of the shell has the further advantage, that an integration of the conductor into the laminated structure of the shell and/or the web is not required. In particular, at the inboard section of the rotor blade, the laminate thickness may be much larger than in the outboard section of the rotor blade in order to provide the required mechanical strength of the rotor blade. An electrical conductor integrated in the thick laminate structure may be covered by several layers of fiber structures and/or by thicker laminate layers in a dry state so that it cannot be seen or inspected visually. The material may become transparent only after casting, when a rearrangement of the conductor is nor possible anymore. This applies both for wind turbine rotor blades manufactured using preforms and to rotor blades fabricated from dry sandwiched laminates.

Advantageously, the usage of the conductor arranged at the inner surface of the shell avoids additional cutting in the fiber laminates at the inboard-portion of the rotor blade which is beneficial with regard of the mechanical strength of the rotor blade. Also, there is no need to visually inspect the conductor during the mold packaging process, since the arrangement of the end conductor may occur in particular after casting of the rotor blade.

The over-lamination of a conductor during the manufacturing of the rotor blade is a complicated process that may include manual placement of many small mats of a fiber-based material, for instance glass-fiber mats. Due to the numerous process steps, also the risk of casting errors during the manufacturing of the rotor blade is increased, in particular, since the additional covering mats introduced for over-laminating the cable are extra material which is put into a mold used for manufacturing of the rotor blade. This can in some situations lead to the movement of structured mats and/or to the formation of wrinkles in the fiber used for over-laminating the cable and/or for manufacturing the shell and/or the web structure.

Since the end conductor can be retrofitted after the casting of the rotor blade, the complexity of the blade mold packaging process is reduced. Furthermore, the risk of a failure of the connection between the web terminal and the root-end terminal is reduced, since there no need for handling the respective conductor during production of the rotor blade. Since the end conductor is arranged at the inner surface of the shell, the service of the rotor blade, in particular of lightning down conductor system of the rotor blade, is facilitated due to the improved visibility and the improved accessibility of the end conductor.

In addition, since a connection between the root-end terminal and an embedded conductor may be avoided, the root-terminal may be smaller and/or of a simpler shape, so that it may be provided at less costs. Furthermore, a smaller root-end terminal, or a root-end terminal protruding less from the inner surface of the shell, respectively, may reduce the wear on mandrels used to occupy the interior of the rotor blade during manufacturing. Since the mandrels are removed after casting of the blade, for instance by sliding them out of the root-end of the blade, a flatter or less protruding root-end terminal reduces the wear of the outer surface of the mandrels.

Preferably, the end conductor is a cable, or the end conductor is a solid conductor rail. The end conductor may be a flat cable, a braided cable or a round cable and it may be insulated or non-insulated. The end conductor may also be a solid conductor rail, in particular an uninsulated conductor rail. The end conductor may for instance consist at least partly of copper or another conductive metal.

In a preferred embodiment, the end conductor is attached to the inner surface of the shell by one or more fixation means adhered to the inner surface of the shell. By fixating the end conductor to the inner surface of the shell, an unintended movement of the conductor during operation on the wind turbine rotor blade can be prevented. The usage of fixation means adhered to the inner wall has the advantage that their fixation may occur after casting of the blade and without any influence on the structure and/or the stability of the rotor blade shell. Hence, no additional laminate layers and no conductor has to be added during the manufacturing of the rotor blade.

Preferably, the fixation means is a fastening strip or a lamination layer. The fastening strip may for instance be used for attaching an insulated cable to the inner surface of the shell, since no additional insulation is required in this case.

In addition or alternatively to the fastening strips, one or more lamination layers may be used for adhering the end conductor to the inner surface of the shell, in particular when an uninsulated conductor is used as end conductor, since by the lamination layer, an insulation of the conductor can be obtained. The attachment of the end conductor using the lamination layers may occur in particular after the shell has been casted, so that the lamination layers are laminated to the inner surface of the shell after the shell has been casted.

Preferably, the web terminal is connected to a lightning down conductor of the lightning down conductor arrangement, wherein the lightning down conductor is at least sectionally arranged at and/or embedded in the web structure. Hence, the web terminal may be an end point of a lightning down conductor embedded in and/or arranged at the web structure. The web terminal may in particular be close to the inboard end of the web structure. Preferably, the lightning down conductor may be an in-casted electrical cable or wire, for instance a non-insulated flat conductive cable, a round and/or an insulated conductive cable or any combination thereof.

In a preferred embodiment, the lightning down conductor is electrically connected to at least one connection terminal at least partly embedded in the web structure, wherein the connection terminal is electrically connected to at least one electrically conductive shell section. The at least one connection terminal is used to allow for an electrical connection between the lightning down conductor at the web structure to one or more electrically conductive shell sections.

The connection terminal and the web terminal may be provided by a mutual terminal element. Alternatively, the connection terminal may be a separate terminal arranged in a spanwise distance to the web terminal.

The electrically conductive shell section may be part of the shell and connected to the lightning down conductor arrangement in order to allow for grounding lightning strikes which hit the electrically conductive shell section and/or for providing a potential equalization between the conductive shell sections and the lightning down conductor at the web structure.

Preferably, the connection terminal comprises at least two terminal elements, wherein a section of the lightning down conductor is enclosed between the terminal elements, wherein at least one of the terminal elements is connected to the conductive shell section. Hence, the section of the lightning down conductor is sandwiched between the terminal elements. The section of the lightning down conductor arranged between the terminal elements may be an intermediate section of the lightning down conductor or an end section of the lightning down conductor.

One of the terminal elements or each of terminal elements may be connected to one or more conductive shell sections. The connection terminal may be embedded in such manner in the web structure, that one connection terminal or both connection terminals are accessible from the outside.

In particular, the connection terminal may be integrated in the web structure in such manner that a first terminal element is for instance accessible from a leading edge side of the web structure and the second terminal element is accessible from a trailing edge side of the web structure. This allows for providing electrical connections to both sides of the web structure and therefore to provide electrical connections to conductive shell sections on both sides of the web structure in a so-called T-connection. Advantageously, by providing the connection terminal in such manner that it is accessible from both sides of the web structure, the cutting of holes through the web section after casting can be avoided. Alternatively, the connection terminal may be embedded in such manner that only one of the terminal elements is accessible from outside, wherein in particular also electrical connections to conductive shell sections occur only on one side of the web structure.

In an alternative embodiment, the connection terminal comprises an electrically conductive connector element with a first contact portion connected to the conductive shell section and two second contact portions, wherein one of the second contact portions is connected to the lightning down conductor and the other second contact portion is connected to a further lightning down conductor. In this embodiment of the connection terminal, the first contact portion, which is in particular accessible from outside the web structure, is connected to the conductive shell section. The connection may for instance occur by a cable, which is attached to the first contact portion with one end, wherein the other end is connected to the conductive shell section, either directly or via a shell terminal electrically connected to the electrically conductive shell section.

The second contact portions of the contact element are each connected to one lightning down conductor, wherein in particular an electrical connection between the down conductor and the further lighting down conductor is created via the connector element. One of the down conductors connected to the second section may connect the connection terminal to the web terminal.

It is possible that in the inboard section and optionally also in the outboard section of the rotor blade, more than one connection terminal is arranged, in particular to enable electrical connections to one or more electrically conductive shell section at a plurality of positions over the spanwise length of the blade. The connection terminals may all be manufactured according to one of the aforementioned embodiments. Alternatively, also a combination of these embodiments may be used for a plurality of the connection terminals of a rotor blade.

Preferably, the conductive shell section is connected to at least one shell terminal by at least one shell conductor embedded in the shell, wherein the shell terminal is connected to the connection terminal, in particular by at least one cable.

The electrically conductive shell section may be connected to the shell conductor for instance by one or more carbon-fiber based structures embedded in the shell, so that an electrical connection between the shell conductor and the conductive shell section is obtained. The shell conductor is connected to at least one shell terminal, wherein the shell terminal is connected to the connection terminal for integrating the electrically conductive shell sections in the lightning down conductor system of the rotor blade.

The connection between the shell terminal and the connection terminal at the web may occur in particular by a cable, which is not embedded in the shell and/or in the web structure.

Hence, the cable can be arranged after casting of the rotor blade connecting the shell terminal to the connection terminal at the web. The cable can be in particular an insulated flat, braided or round cable, for example a copper cable. In particular, the same type of cable may be used as for providing the end conductor.

In a preferred embodiment, the shell terminal comprises at least two terminal elements, wherein the section of the shell conductor is enclosed between the terminal elements, wherein at least one of the terminal elements is connected to the connection terminal, or the shell terminal comprises an electrically conductive connector element with a first contact portion connected to the connection terminal and a second contact portion connected to the shell conductor, wherein at least the second contact portion is embedded in the shell.

By providing the shell terminal by at least two terminal elements, advantageously the same terminal elements as for providing the connection terminal at the web may be used. This reduces the number of different terminals required for the manufacturing of the rotor blade, which may be beneficial for simplicity and for cost-saving purposes.

Alternatively, the shell terminal may be provided as an electrically conductive connector element, which comprises a first contact portion and a second contact portion. The first contact portion is connected to the connection terminal, in particular by at least one cable, wherein the second contact portion is connected to the shell conductor embedded in the shell. In this case, in particular the first contact portion is accessible from outside, wherein the second contact portion as well as the section of the shell conductor attached to the second contact portion are embedded in the shell.

In a preferred embodiment, the electrically conductive shell section is a carbon beam, a carbon spar cap, a carbon fiber-based shell section and/or a lightning receptor. Also a combination of different types of electrically conductive shell section may be arranged in the shell and connected to the lightning down conductor arrangement as previously described. The lightning receptor may be part of a lightning receptor system at the outer surface of the shell, wherein the lightning receptor may be, at least partly, exposed to the exterior blade environment for capturing lightning strikes.

Preferably, the web terminal comprises at least two electrically conductive terminal elements, wherein an end section of the lightning down conductor is enclosed between the terminal elements of the web terminal, or the web terminal comprises an electrically conductive connector element with a first contact portion connected to the end conductor and a second contact portion connected to the lightning down conductor, wherein at least the second contact portion is embedded in the web structure.

By providing also the web terminal with two terminal elements, the same terminal elements as used for the connection terminal at the web structure and/or for the shell terminals may be used further reducing the number of different parts used for manufacturing the rotor blade. Alternatively, also the web terminal may be provided as an electrically conductive connector element with a first contact portion and a second contact portion, so that the web terminal may be provided in the same manner as the shell terminals, allowing for usage of the same type of connector elements both for providing the shell terminals and the web terminals. This also beneficially affects the manufacturing process.

In a preferred embodiment, the root-side end terminal comprises at least one end terminal connector element with a contact surface connected to the end conductor, wherein the end terminal connector element is arranged on the inner surface of the shell or partly embedded in the shell. The end terminal connector element may be arranged on the inner surface, so that it may be mounted after casting of the rotor blade, in particular together with the end conductor. Alternatively, the end terminal connector element may be partly embedded in the shell and therefore arranged in the fiber-based laminate structure of the shell prior to the casting.

In particular, the contact surface of the root-end terminal is not embedded in the shell so that it is accessible from the outside allowing for providing the electrical connection to the end conductor, in particular after casting the shell. The end conductor may be connected to the contact surface for instance by at least one electrically conductive fixation means like a screw, by welding or by other fixation methods. It is also possible that the end terminal connector element is integrated in the end conductor, or that the end conductor and the end terminal connector element are provided as a one-piece element.

A wind turbine according to the invention comprises at least one wind turbine rotor blade according to the invention.

Preferably, the rotor blade is attached to a hub of the wind turbine, wherein the root-side end terminal of the rotor blade is connected to a further lightning down conductor arrangement arranged at least partly in the hub. By this connection, the lightning down conductor arrangement of the rotor blade is connected to the further lightning down conductor arrangement in the hub so that lightning strikes hitting the rotor blade of the wind turbine may be grounded through the lightning down conductor arrangement in the rotor blade and the further lightning down conductor arrangement arranged at least partly in the hub. The further lightning down conductor arrangement is in particular connected to ground to allow for grounding of the lightning strikes.

All details and advantages described in relation to the wind turbine rotor blade according to the invention apply correspondingly to the wind turbine according to the invention and vice versa.

Other objects and features of the present invention will become apparent from the following detailed description considered in conjunction with the accompanying drawings. The drawings, however, are only principal sketches designed solely for the purpose of illustration and do not limit the invention. The drawings show:
- Fig. 1: An embodiment of a wind turbine according to the invention,
- Fig. 2: a section of an embodiment of a wind turbine rotor blade according to the invention,
- Fig. 3: a perspective section cut of the embodiment of the rotor blade,
- Fig. 4: a first embodiment of a connection terminal in an exploded view,
- Fig. 5: the first embodiment of the connection terminal in the mounted state,
- Fig. 6: a second embodiment of a connection terminal in an exploded view,
- Fig. 7: the second embodiment of the connection terminal in the mounted state,
- Fig. 8: a first embodiment of a shell terminal,
- Fig. 9: a second embodiment of a shell terminal,
- Fig. 10: an alternative embodiment of a cable connection, and
- Fig. 11: a detailed view on the web terminal of the embodiment of the rotor blade.

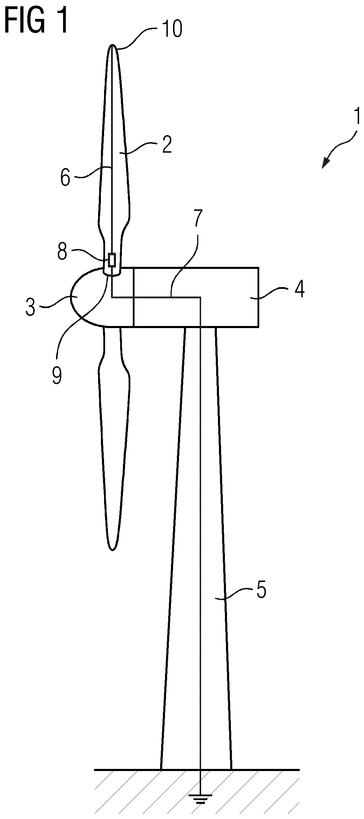

In fig. 1, an embodiment of a wind turbine 1 is shown. The wind turbine 1 comprises a plurality of wind turbine rotor blades 2, which are attached to a hub 3 of the wind turbine 1. The hub 3 is mounted at a nacelle 4 of the wind turbine 1, wherein the nacelle 4 is supported on a tower 5 of the wind turbine 1.

Since the rotor blades 2 of a wind turbine 1 are prone to be hit by lightning strikes, each of the rotor blades 2 comprises a lightning down conductor arrangement 6 for grounding lightning strikes. Therefore, the lightning down conductor arrangement 6 of the rotor blade 2 is connected to a further lightning down conductor arrangement 7 arranged in the hub 3, the nacelle 4 and the tower 5 for grounding lightning strikes hitting the rotor blade 2. For connecting the lightning down conductor arrangement 6 to the further lightning down conductor arrangement 7, the lightning down conductor arrangement 6 comprises at least one root-side end terminal 8 arranged at the root-side end 9 of the rotor blade 2. The root-side end terminal 8 is used for creating an electrical connection to the further lightning down conductor arrangement 7.

The lightning down conductor arrangement 6 of the rotor blade 2 is shown in fig. 1 only in a schematical manner. The lightning down conductor arrangement 6 may comprise a plurality of lightning down conductors, lightning receptors and the like, which are electrically connected to each other and distributed over the spanwise length of the rotor blade 2, or between the root-side end 9 and a tip-side end 10 of the rotor blade 2, respectively.

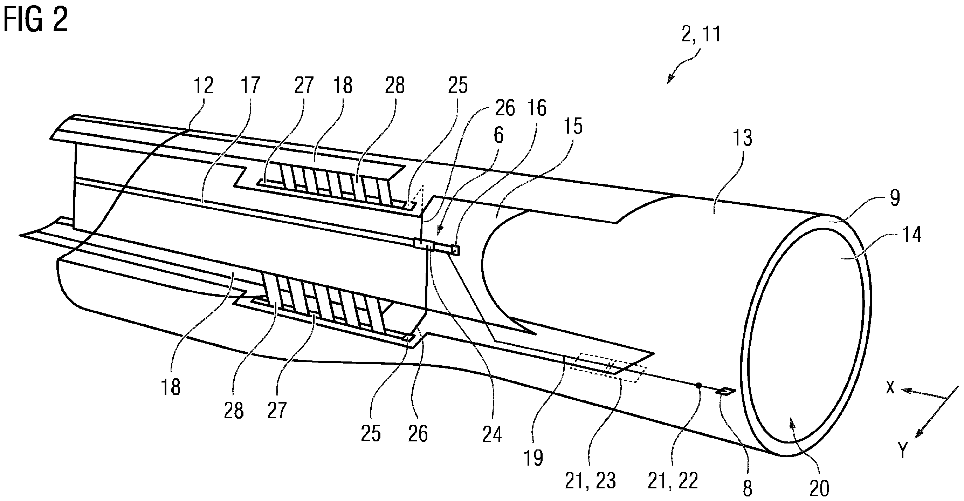

In fig. 2, a detailed view of the rotor blade 2 is shown. Fig. 2 depicts an inboard section 11 of the rotor blade, which spans between the root-side end 9 and a position 12, in which the rotor blade 2 has the largest chord length, hence the largest width in cord-wise direction. In fig. 2, the cord-wise direction is denoted as y-axis, wherein the spanwise direction spans in x-direction towards the tip 10 of the rotor blade 6. Hence, the spanwise direction lies along a longitudinal axis of the rotor blade, wherein the longitudinal axis spans from the root-side end 9 to the tip-side end 10 of the rotor blade 2 along a straight line or along a curve, depending on the shape of the rotor blade 2.

The shell 13 is made from at least one fiber-laminate based structure. In fig. 2, the shell 13 is shown transparently, so that further components of the rotor blade 2 arranged within an interior 14 of the rotor blade 2 can be seen. The rotor blade 2 further comprises a web structure 15 which spans between two opposing sides of the shell 13 and therefore at least partly through the interior 14. Also the web structure 15 is made from at least one fiber laminate-based structure. The lightning down conductor arrangement 6 comprises a web terminal 16, which is at least partly embedded in the web structure 15.

Both the shell 13 and the web structure can be created simultaneously in a casting process forming the rotor blade 2 from a plurality of components, including fiber-based structures and further materials like core structures or the like. In addition, also electrically conductive components may be included, for instance the web terminal 16, a lightning down conductor 17 of the lightning down conductor arrangement 6 and/or a plurality of electrically conductive shell components 18.

The web terminal 16 arranged at the web structure 15 is at least partly embedded in the web structure 15. The web terminal 16 is connected to the at least one lightning down conductor 17 of the lightning down conductor arrangement 6 as well as to the conductive shell sections 18, as will be described later in further detail. The web terminal 16 and the root-end terminal 8 are arranged in a spanwise distance towards each other. The spanwise distance between the web terminal 16 and the root-end terminal 18 may for instance be between 5 m and 30 m, in particular between 12 m and 20 m.

To allow for connecting the lightning down conductor arrangement 6 to a further lightning down conductor arrangement 7 at the hub 3 of the wind turbine 1, the web terminal 16 is connected to the root-end terminal 8 by an end conductor 19 for bridging the spanwise distance between the web terminal 16 and the end terminal 8. The end conductor 19 is arranged at the inner surface 20 of the shell 13. In particular, the end conductor 19 may be arranged in the interior 14 after casting the shell 13, or the entire rotor blade 2, respectively.

By providing an end conductor 19 arranged at the inner surface 20 of the shell 13, the usage of an embedded conductor, which is embedded in the shell 13 and/or in the web structure 15, can be avoided. This facilitates to establish the electrical connection between the web terminal 16 and the end terminal 8, in particular since the fiber laminate-based structure of the shell 13 and/or the web 15 can have a significant thickness at the inboard section 11 to provide sufficient mechanical strength of the rotor blade 2.

The end conductor 19 is for instance a cable, which is attached with one end to the web terminal 16 and with the other end to the root-end terminal 8. The cable may be provided as a round, flat or braided insulating cable, wherein the end conductor 19 is attached to the inner surface 20 for instance by using a plurality of fastening means 21. In fig. 2, only one fastening means 21 is shown exemplarily. The end conductor 19 may be attached to the inner surface 20 using a plurality of fastening means 21, in particular for attaching at least one section or the entire end conductor 19 to the inner surface 20.

Alternatively, the end conductor 19 may be a non-insulated cable or a solid conductor rail consisting at least partly of an electrically conductive metal like copper that is attached to the inner surface 20 of the shell 13 by one or more fixation means 21, which are each provided as a lamination layer 23. In Fig. 2, two lamination layers 23 are shown exemplarily in dashed lines. The lamination layers 23 may be laminated to the inner surface 20 of the shell 13 in particular after casting of the shell 13, or the entire rotor blade 2, respectively. By the lamination layers 23, at least one section or the entire end conductor 19 may be adhered to the inner surface 20. Advantageously, the usage of the lamination layers 23 allows for creating an insulation when an uninsulated cable and/or an uninsulated conductor rail is used as end conductor 19.

At the web structure 15, a connection terminal 24 is arranged, wherein the connection terminal 24 is neighbouring to the web terminal 16 along the lightning down conductor 17. It is alternatively possible that the connection terminal 24 and the web terminal 16 are provided by a mutual terminal element.

The connection terminal 24 is used to connect the lightning down conductor 17 to at least one electrically conductive shell section 18. The connection terminal 24 is at least at one side of the web structure 15 accessible from the interior 14 of the rotor blade 2 to allow for establishing the electrical connections to the conductive shell sections 18. Since the lightning down conductor 17 may be at least partly integrated in the web structure 15, so that it is surrounded by the fiber laminate-based structure forming the web structure 15, it may not accessible for the application of further electrical connections. Therefore, the lightning down conductor 17 is connected to at least one connection terminal 24, which is accessible at least at one side of the web structure 15 for establishing electrical connections. Different embodiments for the connection terminal 25 will be described later in further detail.

The connection terminal 24 is connected to two shell terminals 25, for instance by one or more cables 26. Also, the cables 26 are arranged in the interior 14 after casting of the web structure 15 and/or the shell 13, so that they are also not embedded in a fiber laminate-based structure. The cables 26 may each be an insulated flat, braided or round cable, for example a copper cable. In particular, the same type of cable may be used as for providing the end conductor 19.

The shell terminals 25 are each connected to a shell conductor 27, which is embedded at least partly in the shell 3, or in the fiber laminate-based structure forming the shell 13, respectively. The shell conductors 27 are connected to the electrically conductive shell sections 18 by a plurality of carbon fiber-based structures 28 which surround the shell conductor 27 at least partly and which are electrically connected and/or integrated into the electrically conductive sections 18.

The electrically conductive shell section 18 may be for instance a pultruded carbon profile, forming in particular a carbon beam or a carbon fiber-based spar cap of the rotor blade 2. The carbon-fiber based structures 28 may be for instance unidirectional carbon fiber mats, which may lay loosely on the electrically conductive shell section 18 and which may be wrapped for instance around the shell conductor 27.

The carbon fiber-based structures 28 are shown to be arranged at an angle of 45° to the spanwise direction of the shell conductor 27, or to the spanwise direction of the electrically conductive shell section 18. However, also other orientations or angles, for example an angle of 90°, are possible.

The electrically conductive shell sections 18 may for instance be, lightning receptors, carbon-fiber-based shell portions, carbon fiber-based beams and/or carbon spar caps of the wind turbine rotor blade 2, which are electrically conductive and which are connected to the lightning down conductor 17 for the grounding of lightning strikes and/or for providing a potential equalization.

It is in particular possible, that along the spanwise length of the blade, further shell conductors 27 are arranged, wherein these conductors 27 are also connected to the electrically conductive shell sections 18 by the carbon fiber-based structures 28. For connecting these shell conductors 27 to the lightning conductors 17, further connection terminals 24, further shell terminals 25 as well as further cables 26 may be used, as it is schematically shown in fig. 2 for the most inboard connection, or the connection closest to the root-end 9 of the rotor blade 2, respectively.

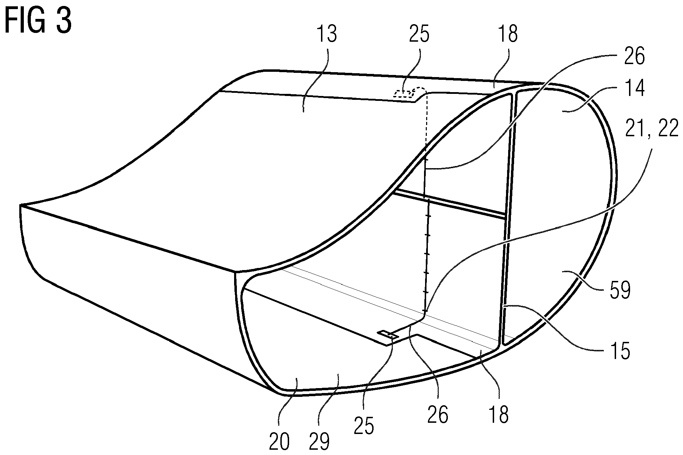

In fig. 3, a cross-sectional view of the rotor blade 2 is shown. The cables 26, which connect the shell terminals 25 to the connection terminal 24 are attached to the inner surface 20 of the shell 13 and/or to the surface of the web structure 15 by fastening means 21, which are provided as fastening strips 22 as previously described for the end conductor 19.

The upper shell terminal 25 is connected to an electrically conductive shell section 18 at a pressure side of the blade 2, wherein the other shell terminal 25 is connected to an electrically conductive portion 18 at the suction side of the blade 2. As can be seen from fig. 3, the electrically conductive sections 18 may be electrically conductive spar caps attached to the suction side and pressure side ends of the web structure 15. Additionally or alternatively, the electrically conductive sections 18 may be lightning receptors used for catching lightning strikes at an outer surface of the shell 13.

The web structure 15 divides the interior 14 of the rotor blade 2 into a leading-edge side 59 and a trailing edge side 29. In the embodiment shown in fig. 3, the connections to the connection terminal 24 occur at the trailing edge side 29. It is however possible, that alternatively or additionally, one or more connections are also arranged in the leading-edge side 59 of the web structure 15. Therefore, the shell conductors 27, or further shell conductors 27, respectively, as well as the carbon fiber structures 28, or further carbon fiber structures 28, respectively may be arranged at the leading-edge side 59 of the web 15.

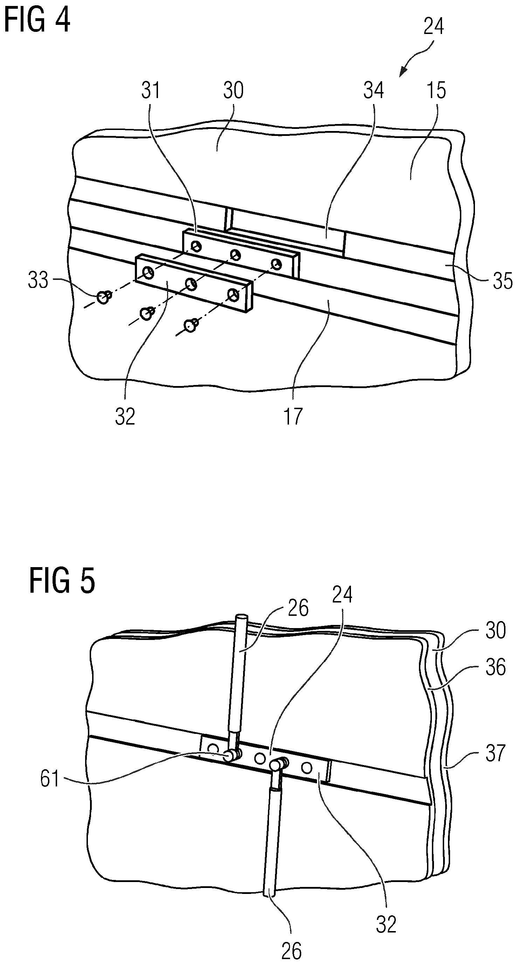

In fig. 4, the connection terminal 24 at the web structure 15 is shown in detail. From the web structure 15, which is a fiber laminate-based structure, only a core panel 30 is shown, wherein one or more fiber-based players covering the core panel 13 on the depicted surface, and/or on the opposing surface, respectively, are omitted.

The connection terminal 25 is shown in an exploded view. The connection terminal 25 comprises two terminal elements 31, 32, wherein a section of the lightning down conductor 17 is enclosed between the terminal elements 31, 32. Hence, an intermediate or end section of the lightning conductor 17 is sandwiched between the two terminal elements 31, 32. The terminal elements 31 and 32 of the connection terminal 25 are electrically conductive and may be for instance made of metal, for example copper or the like. By the connection terminal 25, an electrical connection between the cables 26, or the conductive shell sections 18, respectively, and the lightning down conductor 17 is established.

The connection terminal elements 31, 32 may be attached towards each other by a plurality of fastening means 33, which may for instance be provided as screws. The lightning down conductor 17 may for instance be a flat or braided cable or a conductor rail, which may comprise corresponding holes for the insertion of the fixation means 33 so that a stable attachment of the lightning down conductor 17 between the terminal elements 31, 32 can be obtained.

The connection terminal 25 is arranged in a corresponding recess 34, which is provided in the core element 30 of the web structure 15. Also for the lightning down conductor 17, a corresponding recess 35 may be provided, so that the lightning down conductor 17 can be embedded in the web structure 15 underneath one or more fiber laminate layers covering the lightning down conductor 17 and the core panel 13. These covering laminates may comprise an opening, so that the terminal element 32 remains accessible. It is possible, that the recess 34 is provided as a through hole, so that also the opposite terminal element 31 may be accessed from the opposing side of the web structure 15 for also providing electrical connections to shell terminals 25 at the other side of the web structure 15 as previously described.

In fig. 5, the connection terminal 24 is shown in the mounted state, wherein also two fiber laminates layers 36, 37 are shown, which cover the core element 30. The attachment of the cables 26 to the connection terminal 24, or the respective terminal element 32, respectively, occurs by a plurality of fastening means 61, as will be described later in more detail.

The fiber laminate layer 36 covering the side of the core element 30, on which the cables 26 are arranged, may comprise an opening which gives access to the entire terminal element 32. Alternatively, also small holes may be provided in the fiber laminate layer 36, so that only the fastening means 61 may penetrate the fiber laminate layer 36 for creating an electrical connection between the cables 26 and the connection arrangement 24.

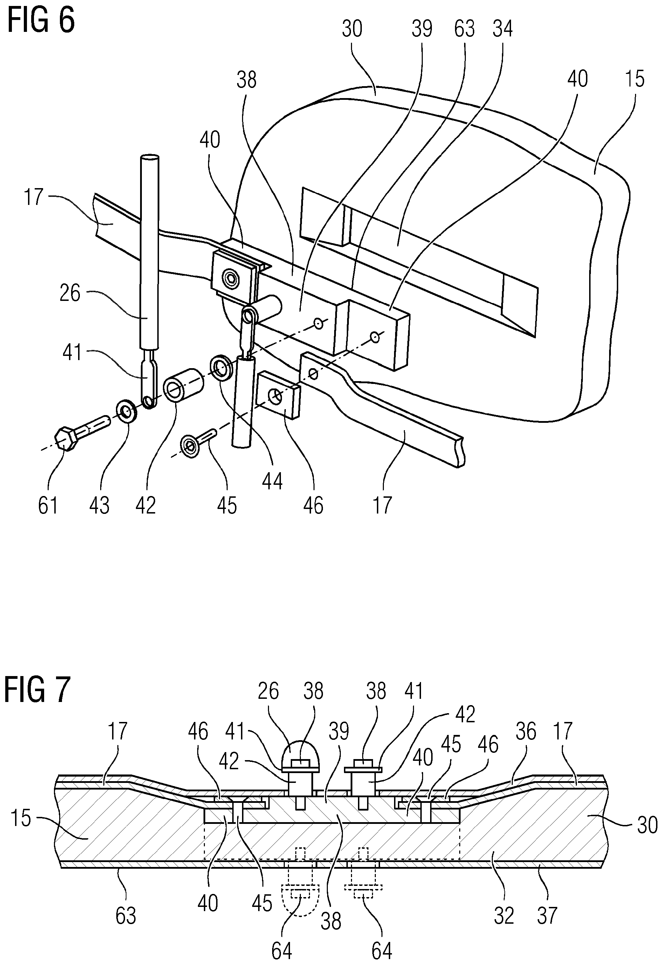

In fig. 6, an alternative embodiment of the connection terminal 24 is shown. In this embodiment, the connection terminal 24 is provided as an electrically conductive connector element 38. The connector element 38 comprises a first contact portion 39 connected to the conductive shell section 18. Furthermore, the connector element 38 comprises two second connection portions 40, which are each connected to a lightning down conductor 17 of the lightning down conductor arrangement 6. In this embodiment, the connection terminal 24 is used to connect a lightning down conductor 17 to a further lightning down conductor 17. As previously described, also the connector element 38 may be arranged in a corresponding recess 34 of the core panel 30 of the web structure 15, wherein in particular the second connection portions 14, the lightning down conductors 17 can be embedded under at least one fiber layer (not shown) and/or in a corresponding recess (not shown).

The connection between the first connection portion 39 and the cables 26 occurs by using the fastening means 61, which are provided as screws. The fastening means 61 are connected to cable shoes 41 of the cables 26, wherein the connection to the first connection portion 39 occurs via the usage of at least one distance element 42 as well as the usage of one or more washers 43, 44. The lightning down conductors 17 are connected to the second connection portions 40 of the connector element 30 by a fastening means 45 and a rectangular washer 46.

In fig. 7, the second embodiment of the connection terminal 24 is shown in its mounted state. The connection terminal 24 is embedded in the web structure 15, wherein the first contact portion 39 and the second contact portion 40 are embedded underneath a fiber layer 36 as previously described.

It is possible, that the recess 34 is provided as a through hole, so that the connector element 38 is accessible also from the opposing side of the web structure 15. In this case, the thickness of the connector element 38 between the first connection portion 39 and an opposing backside 63 of the connector element 38 may be equal or approximately equal to the thickness of the core element 30 of the web structure 15, as shown schematically in dashed lines.

Providing an accessible backside 63 of the connector element 38 by arranging the connector element 38 in a through hole facilitates the localization of the connector element 38 and therefore of the connection terminal 24 also from the opposing side of the web structure 15 after casting. Further cables 64 arranged at the opposing side of the web structure 15 may be connected to electrically conductive shell sections 18 arranged in the shell 13 at least partly on the opposing side of the web structure 15, as previously described. The further cables 64 may be connected to the backside 63 of the conductor element 34 for instance by using the same fixation methods as for fixating the cables 26 to the first connection portion 39.

The further cables 64 may be arranged in parallel to the cables 26, and therefore corresponding to the course of the cables 26 as shown in Fig. 2. Alternatively, the cables 26 and the further cables 64 may be arranged in other orientations, in particular without significant parallel segments of the cables 26, 64 to avoid repelling of the cables 26 due to the electric field created in case of a lightning strike, since the repelling could cause damage to the cables 26, 64 and/or to their connections to the connector element 38.

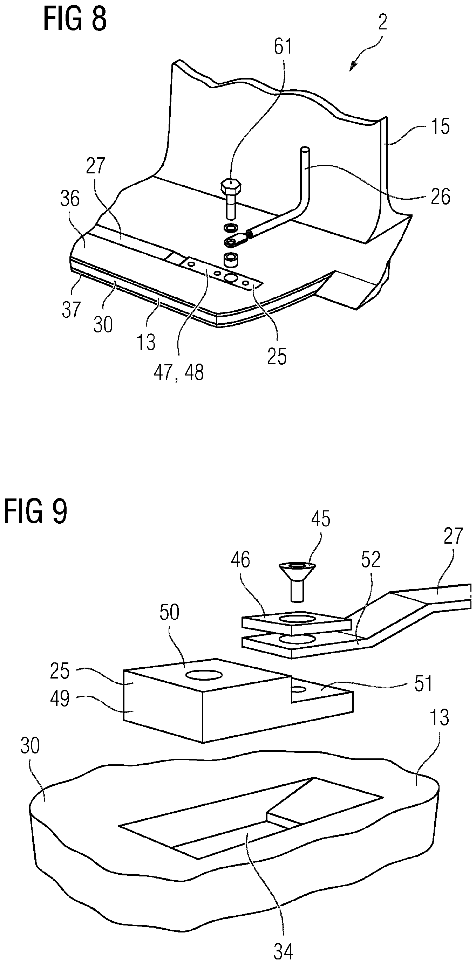

In fig. 8, the connection of the cable 26 to a first embodiment of a shell terminal 25 is shown. The shell terminal 25 is provided using two terminal elements 47, 48, which are embedding an end portion of the shell conductor 27. The shell conductor 27 as well as the shell terminal 25 are embedded in a recess 34 provided in a core element 30 of the fiber-based laminate structure of the shell 13. Also, the core element 30 of the shell 13 is arranged between two fiber layers 36, 37.

The terminal elements 47, 48 are in particular fabricated in the same way as the terminal elements 31, 32 used for creating the connection terminal 24 at the web structure 15, so that equally fabricated elements can be used. Also, the connection between the cable 26 and the shell terminal 25 occurs in the same manner as described in relation to the connection terminal 24.

In fig. 9, a second embodiment of a shell terminal 25 is shown in an exploded view. The shell terminal 25 comprises an electrically conductive connector element 49 with a first contact portion 50 and a second contact portion 51. The first contact portion 50 is connected to the connection terminal 24 at the web 15, in particular by means of an electrical cable 26 as previously described.

The second connection portion 51 is connected to an end section 52 of the shell conductor 27, in particular by using a fastening means 45 and a rectangular washer 46 as previously described in relation to fig. 6. The connector element 49 is electrically conductive and may be manufactured using an electrically conductive metal, for instance copper or the like.

Also, connector element 49 may be arranged in a corresponding recess 34 in the core panel 30 of the shell 13. The covering fabric layers 36, 37, which may at least partially embed the shell terminal 25 and the shell conductors 27, are not shown in fig. 9. The embedding of the connector element 49 occurs in particular correspondingly to the connection terminal 25 in the web structure 15 and hence correspondingly to fig. 7.

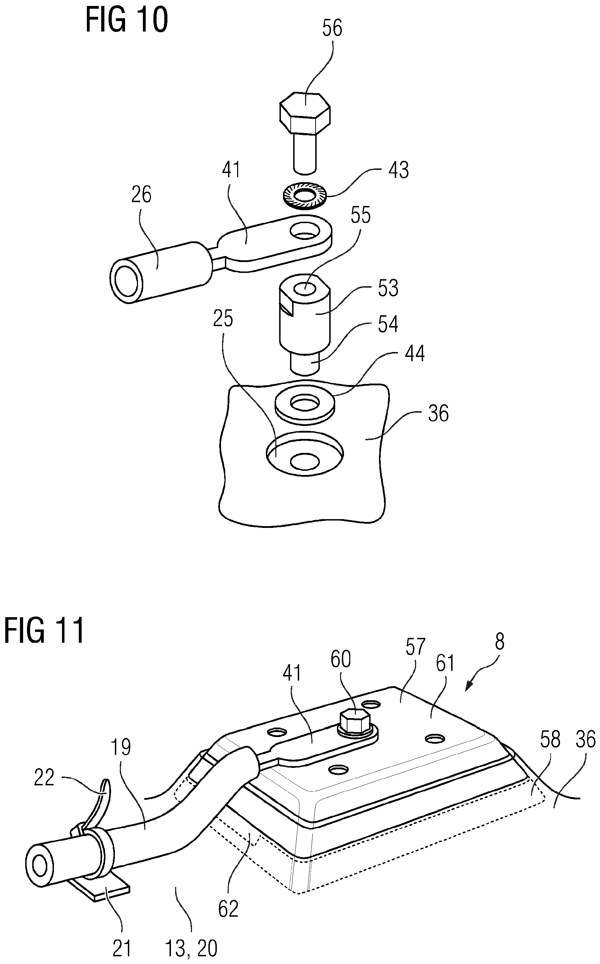

In fig. 10, an alternative connection between a cable 26 and the shell terminal 25 is shown. The same type of connection may also be used to connect the cable 26 to one of the embodiments of the connection terminal 24 at the web structure 15.

In this embodiment, the connection of the cable 26 occurs by using a threaded intermediate section 53, which comprises a male threaded portion 54 and a female threaded portion 55. The cable shoe 41 is connected to the threaded intermediate portion 46 using a fastening means 56, which is provided as a screw. The washers 43 and 44 may be used in between the fastening means 56 and the cable show 41, or in between the threaded intermediate section 36 and the top surface of the shell connection terminal 25, respectively.

The web terminal 16 may be provided in the same manner as the shell terminals 25, hence either from two terminal elements 47, 48 and/or from a connector element 49. In case of the web terminal 8 provided as a connector element 49, an end section 52 of the lightning down conductor 17 is connected to the second connection portion 51, wherein the first connection portion 50 is connected to the root-side end terminal 8 using the side end conductor 19. The same applies, when the web terminal 16 is provided as two terminal elements 47, 48, wherein an end section 52 of the lightning down conductor 17 is embedded between the terminal elements 47, 48, and wherein one or both of the terminal elements 47, 48 are connected to the root-side end terminal 8 using one or more side end conductors 19.

In fig. 11, an embodiment of a root-side end terminal 8 is shown. Additionally, also a portion of the end conductor 19 is shown. The end conductor 19 is provided as an insulated round cable, which is attached to the inner surface 20 of the shell 13 by a fastening means 21. The fastening means 21 is a fastening strip 22, which is for instance adhered to the inner surface 20 of the shell 13.

The web terminal 8 is provided as an electrically conductive end terminal connector element 57, which is partly embedded in the shell 13, or partly arranged underneath a top laminate layer 36 of the shell 13, respectively. In an alternative embodiment, the root-side end terminal 8 comprises a further end terminal connector element 58, which is arranged under the end terminal connector element 57 and which is shown in Fig. 11 in dashed lines.

By providing the further end terminal connector element 58, an opening 62 may be provided, in which a flat conductor embedded in the shell 13 may also be connected to the root-side end terminal 8, if necessary. If such a connection is not required, the further end terminal connector element 58 is preferably omitted, so that the root-side end terminal 8 protrudes less into the interior 14 of the rotor blade 2. This may facilitate the manufacturing of the rotor blade, for instance the pulling out of mandrels arranged in the interior 14 of the rotor blade 2 prior to a resin infusion in a plurality of fabric layers arranged around the mandrels for manufacturing of the shell 13 and/or the web structure 15.

The connection of the end conductor 19 to the root-side end terminal 8 may occur by using at least one fixation element 60, for instance a screw, a plurality of washers and/or the like, for attaching a cable shoe 41 of the end conductor 19 to the electrically conductive root-side end terminal 8. Alternatively, also other fixation methods like welding may be used. Furthermore, the root-side end terminal 8 may be used for attaching one or more conductors used for connecting the lightning down conductor arrangement 6 in the rotor blade 2 to the further lightning down conductor arrangement 7 at the hub 3 as previously described.

It is alternatively possible that the end terminal connector element 58 is integrated in the end conductor 19, or that the end conductor 19 and the end terminal connector element 58 are provided as a one-piece element, respectively. In this case, both the end conductor 19 and the end terminal connector element 58 may be retrofitted after casting of the rotor blade shell 13.

Although the present invention has been described in detail with reference to the preferred embodiment, the present invention is not limited by the disclosed examples from which the skilled person is able to derive other variations without departing from the scope of the invention.

## Claims

1. Wind turbine rotor blade comprising a shell (13), a web structure (14), and a lightning down conductor arrangement (6), wherein the rotor blade (2) extends in a spanwise direction between a tip-side end (10) and a root-side end (9),
**characterized in that**
the web structure (15) is made from at least one fiber-laminate-based structure, wherein the lightning down conductor arrangement (6) comprises at least one web terminal (16) at least partly embedded in the web structure (15) and at least one root-side end terminal (8) arranged in a root-side end portion of the shell (13) in a spanwise distance to the web terminal (16), wherein the root-side end terminal (8) is connected to the web terminal (16) by an end conductor (19) arranged at the inner surface (20) of the shell (13).

2. Wind turbine rotor blade according to claim 1,
**characterized in that** the end conductor is a cable or that the end conductor is a solid conductor rail.

3. Wind turbine rotor blade according to claim 1 or 2, **characterized in that** the end conductor (16) is attached to the inner surface (20) of the shell (13) by one or more fixation means (21) adhered to the inner surface (20) of the shell (13).

4. Wind turbine rotor blade according to claim 3,
**characterized in that** the fixation means (21) is a fastening strip (22) or a lamination layer (23).

5. Wind turbine rotor blade according to one of the preceding claims, **characterized in that** the web terminal (16) is connected to a lightning down conductor (17) of the lightning down conductor arrangement (6), wherein the lightning down conductor (17) is at least sectionally arranged at and/or embedded in the web structure (15).

6. Wind turbine rotor blade according to claim 5,
**characterized in that** the lightning down conductor (17) is electrically connected to at least one connection terminal (24) at least partly embedded in the web structure (15), wherein the connection terminal (24) is electrically connected to at least one electrically conductive shell section (18).

7. Wind turbine rotor blade according to claim 6,
**characterized in that** the connection terminal (24) comprises at least two terminal elements (31, 32), wherein an intermediate section of the lightning down conductor (17) is enclosed between the terminal elements (31, 32), wherein at least one of the terminal elements (31, 32) is connected to the conductive shell section (18).

8. Wind turbine rotor blade according to claim 6,
**characterized in that** that the connection terminal (24) comprises an electrically conductive connector element (38) with a first contact portion (39) connected to the conductive shell section (18) and two second contact portions (40), wherein one of the second contact portions (40) is connected to the lightning down conductor (17) and the other second contact portion (40) is connected to a further lightning down conductor (17).

9. Wind turbine rotor blade according to one of the claims 6 to 8, **characterized in that** the conductive shell section (18) is connected to at least one shell terminal (25) by at least one shell conductor (27) embedded in shell (13), wherein the shell terminal (25) is connected to the connection terminal (24), in particular by at least one cable (26) .

10. Wind turbine rotor blade according claim 9,
**characterized in that** the shell terminal (25) comprises at least two terminal elements (47, 48), wherein a section of the shell conductor (27) is enclosed between the terminal elements (47, 48), wherein at least one of the terminal elements (47, 48) is connected to the connection terminal (24), or that the shell terminal comprises an electrically conductive connector element (49) with a first contact portion (50) connected to the connection terminal (24) and a second contact portion (51) connected to the shell conductor (27), wherein at least the second contact portion (51) is embedded in the shell (13).

11. Wind turbine rotor blade according to one of the claims 6 to 10, **characterized in that** the electrically conductive shell section (18) is a carbon beam, a carbon spar cap, a carbon fiber-based shell section and/or a lightning receptor.

12. Wind turbine rotor blade according to one of the preceding claims, **characterized in that** the web terminal (16) comprises at least two electrically conductive terminal elements (47, 48), wherein an end section of the lightning down conductor (17) is enclosed between the terminal elements (47, 48) of the web terminal (16), or that the web terminal (16) comprises an electrically conductive connector element (49) with a first contact portion (50) connected to the end conductor (19) and a second contact portion (51) connected to the lightning down conductor (17), wherein at least the second contact portion (51) is embedded in the web structure (15) .

13. Wind turbine rotor blade according to one of the preceding claims, **characterized in that** the root-side end terminal (8) comprises at least one end terminal connector element (57) with a contact surface (61) connected to the end conductor (19), wherein the end terminal connector element (8) is arranged on the inner surface (20) of the shell (13) or at least partly embedded in the shell (13).

14. Wind turbine comprising at least one wind turbine rotor blade (2) according to one of the preceding claims.

15. Wind turbine according to claim 14, wherein the rotor blade (2) is attached to a hub (3) of the wind turbine (1), wherein the root-side end terminal (8) of the rotor blade (2) is connected to a further lightning down conductor arrangement (7) arranged at least partly in the hub (3).

## Patentansprüche

1. Windenergieanlagenrotorblatt, umfassend eine Schale (13), eine Stegstruktur (14) und eine Blitzableiteranordnung (6), wobei sich das Rotorblatt (2) in einer Spannweitenrichtung zwischen einem spitzenseitigen Ende (10) und einem fußseitigen Ende (9) erstreckt,
**dadurch gekennzeichnet, dass** die Stegstruktur (15) aus mindestens einer faserlaminatbasierten Struktur besteht, wobei die Blitzableiteranordnung (6) mindestens einen Steganschluss (16), der zumindest teilweise in die Stegstruktur (15) eingebettet ist, und mindestens einen fußseitigen Endanschluss (8), der in einem fußseitigen Endabschnitt der Schale (13) in einem spannweitigen Abstand zu dem Steganschluss (16) angeordnet ist, umfasst, wobei der fußseitige Endanschluss (8) mit dem Steganschluss (16) durch einen Endleiter (19) verbunden ist, der an der Innenfläche (20) der Schale (13) angeordnet ist.

2. Windenergieanlagenrotorblatt nach Anspruch 1, **dadurch gekennzeichnet, dass** der Endleiter ein Kabel ist oder dass der Endleiter eine massive Stromleiterschiene ist.

3. Windenergieanlagenrotorblatt nach Anspruch 1 oder 2, **dadurch gekennzeichnet, dass** der Endleiter (16) an der Innenfläche (20) der Schale (13) durch ein oder mehrere Fixierungsmittel (21) angebracht ist, die an die Innenfläche (20) der Schale (13) geklebt sind.

4. Windenergieanlagenrotorblatt nach Anspruch 3, **dadurch gekennzeichnet, dass** das Fixierungsmittel (21) eine Befestigungsleiste (22) oder eine Laminatschicht (23) ist.

5. Windenergieanlagenrotorblatt nach einem der vorhergehenden Ansprüche, **dadurch gekennzeichnet, dass** der Steganschluss (16) mit einem Blitzableiter (17) der Blitzableiteranordnung (6) verbunden ist, wobei der Blitzableiter (17) zumindest abschnittsweise an der Stegstruktur (15) angeordnet und/oder in diese eingebettet ist.

6. Windenergieanlagenrotorblatt nach Anspruch 5, **dadurch gekennzeichnet, dass** der Blitzableiter (17) elektrisch mit mindestens einem Verbindungsanschluss (24) verbunden ist, der zumindest teilweise in die Stegstruktur (15) eingebettet ist, wobei der Verbindungsanschluss (24) elektrisch mit mindestens einem elektrisch leitfähigen Schalenbereich (18) verbunden ist.

7. Windenergieanlagenrotorblatt nach Anspruch 6, **dadurch gekennzeichnet, dass** der Verbindungsanschluss (24) mindestens zwei Anschlusselemente (31, 32) umfasst, wobei ein Zwischenbereich des Blitzableiters (17) zwischen den Anschlusselementen (31, 32) eingeschlossen ist, wobei mindestens eines der Anschlusselemente (31, 32) mit dem leitfähigen Schalenbereich (18) verbunden ist.

8. Windenergieanlagenrotorblatt nach Anspruch 6, **dadurch gekennzeichnet, dass** dass der Verbindungsanschluss (24) ein elektrisch leitfähiges Verbinderelement (38) mit einem ersten Kontaktabschnitt (39), der mit dem leitfähigen Schalenbereich (18) verbunden ist, und zwei zweiten Kontaktabschnitten (40) umfasst, wobei einer der zweiten Kontaktabschnitte (40) mit dem Blitzableiter (17) verbunden ist und der andere zweite Kontaktabschnitt (40) mit einem weiteren Blitzableiter (17) verbunden ist.

9. Windenergieanlagenrotorblatt nach einem der Ansprüche 6 bis 8, **dadurch gekennzeichnet, dass** der leitfähige Schalenbereich (18) mit mindestens einem Schalenanschluss (25) durch mindestens einen in die Schale (13) eingebetteten Schalenleiter (27) verbunden ist, wobei der Schalenanschluss (25) mit dem Verbindungsanschluss (24), insbesondere durch mindestens ein Kabel (26), verbunden ist.

10. Windenergieanlagenrotorblatt nach Anspruch 9, **dadurch gekennzeichnet, dass** der Schalenanschluss (25) mindestens zwei Anschlusselemente (47, 48) umfasst, wobei ein Bereich des Schalenleiters (27) zwischen den Anschlusselementen (47, 48) eingeschlossen ist, wobei mindestens eines der Anschlusselemente (47, 48) mit dem Verbindungsanschluss (24) verbunden ist, oder dass der Schalenanschluss ein elektrisch leitfähiges Verbinderelement (49) mit einem ersten Kontaktabschnitt (50), der mit dem Verbindungsanschluss (24) verbunden ist, und einem zweiten Kontaktabschnitt (51), der mit dem Schalenleiter (27) verbunden ist, umfasst, wobei mindestens der zweite Kontaktabschnitt (51) in die Schale (13) eingebettet ist.

11. Windenergieanlagenrotorblatt nach einem der Ansprüche 6 bis 10, **dadurch gekennzeichnet, dass** der elektrisch leitfähige Schalenbereich (18) ein Träger aus Karbon, ein Holmgurt aus Karbon ein kohlenstofffaserbasierter Schalenbereich und/oder ein Blitzschutzrezeptor ist.

12. Windenergieanlagenrotorblatt nach einem der vorhergehenden Ansprüche, **dadurch gekennzeichnet, dass** der Steganschluss (16) mindestens zwei elektrisch leitfähige Anschlusselemente (47, 48) umfasst, wobei ein Endbereich des Blitzableiters (17) zwischen den Anschlusselementen (47, 48) des Steganschlusses (16) eingeschlossen ist, oder dass der Steganschluss (16) ein elektrisch leitfähiges Verbinderelement (49) mit einem ersten Kontaktabschnitt (50), der mit dem Endleiter (19) verbunden ist, und einem zweiten Kontaktabschnitt (51), der mit dem Blitzableiter (17) verbunden ist, umfasst, wobei mindestens der zweite Kontaktabschnitt (51) in die Stegstruktur (15) eingebettet ist.

13. Windenergieanlagenrotorblatt nach einem der vorhergehenden Ansprüche, **dadurch gekennzeichnet, dass** der fußseitige Endanschluss (8) mindestens ein Endanschlussverbinderelement (57) mit einer Kontaktfläche (61) umfasst, die mit dem Endleiter (19) verbunden ist, wobei das Endanschlussverbinderelement (8) auf der Innenfläche (20) der Schale (13) angeordnet oder zumindest teilweise in die Schale (13) eingebettet ist.

14. Windenergieanlage, umfassend mindestens ein Windenergieanlagenrotorblatt (2) nach einem der vorhergehenden Ansprüche.

15. Windenergieanlage nach Anspruch 14, wobei das Rotorblatt (2) an einer Nabe (3) der Windenergieanlage (1) angebracht ist, wobei der fußseitige Endanschluss (8) des Rotorblatts (2) mit einer weiteren Blitzableiteranordnung (7) verbunden ist, die zumindest teilweise in der Nabe (3) angeordnet ist.

## Revendications

1. Pale de rotor d'éolienne comprenant une enveloppe (13), une structure d'âme (14), et un agencement à conducteur de paratonnerre (6), la pale de rotor (2) s'étendant dans un sens de l'envergure entre une extrémité côté pointe (10) et une extrémité côté emplanture (9),
**caractérisée en ce que**
la structure d'âme (15) est réalisée à partir d'au moins une structure à base de stratifié de fibres, dans laquelle l'agencement à conducteur de paratonnerre (6) comprend au moins une borne d'âme (16) au moins en partie incorporée dans la structure d'âme (15) et au moins une borne d'extrémité côté emplanture (8) agencée dans une portion d'extrémité côté emplanture de l'enveloppe (13) à une distance d'envergure par rapport à la borne d'âme (16), dans laquelle la borne d'extrémité côté emplanture (8) est connectée à la borne d'âme (16) par un conducteur d'extrémité (19) agencé au niveau de la surface interne (20) de l'enveloppe (13).

2. Pale de rotor d'éolienne selon la revendication 1, **caractérisée en ce que** le conducteur d'extrémité est un câble ou **en ce que** le conducteur d'extrémité est un rail conducteur solide.

3. Pale de rotor d'éolienne selon la revendication 1 ou la revendication 2, **caractérisée en ce que** le conducteur d'extrémité (16) est lié à la surface interne (20) de l'enveloppe (13) par un ou plusieurs moyens de fixation (21) collés sur la surface interne (20) de l'enveloppe (13).

4. Pale de rotor d'éolienne selon la revendication 3, **caractérisée en ce que** les moyens de fixation (21) sont une bande d'attache (22) ou une couche de stratification (23).

5. Pale de rotor d'éolienne selon l'une des revendications précédentes, **caractérisée en ce que** la borne d'âme (16) est connectée à un conducteur de paratonnerre (17) de l'agencement à conducteur de paratonnerre (6), dans laquelle le conducteur de paratonnerre (17) est agencé au moins par sections au niveau de et/ou incorporé dans la structure d'âme (15) .

6. Pale de rotor d'éolienne selon la revendication 5, **caractérisée en ce que** le conducteur de paratonnerre (17) est électriquement connecté à au moins une borne de connexion (24) au moins en partie incorporée dans la structure d'âme (15), dans laquelle la borne de connexion (24) est électriquement connectée à au moins une section d'enveloppe électriquement conductrice (18).

7. Pale de rotor d'éolienne selon la revendication 6, **caractérisée en ce que** la borne de connexion (24) comprend au moins deux éléments de borne (31, 32), dans laquelle une section intermédiaire du conducteur de paratonnerre (17) est enfermée entre les éléments de borne (31, 32), dans laquelle au moins l'un des éléments de borne (31, 32) est connecté à la section d'enveloppe conductrice (18).

8. Pale de rotor d'éolienne selon la revendication 6, **caractérisée en ce que** la borne de connexion (24) comprend un élément connecteur électriquement conducteur (38) avec une première portion de contact (39) connectée à la section d'enveloppe conductrice (18) et deux deuxièmes portions de contact (40), dans laquelle l'une des deuxièmes portions de contact (40) est connectée au conducteur de paratonnerre (17) et l'autre deuxième portion de contact (40) est connectée à un conducteur de paratonnerre (17) supplémentaire.

9. Pale de rotor d'éolienne selon l'une des revendications 6 à 8, **caractérisée en ce que** la section d'enveloppe conductrice (18) est connectée à au moins une borne d'enveloppe (25) par au moins un conducteur d'enveloppe (27) incorporé dans l'enveloppe (13), dans laquelle la borne d'enveloppe (25) est connectée à la borne de connexion (24), en particulier par au moins un câble (26).

10. Pale de rotor d'éolienne selon la revendication 9, **caractérisée en ce que** la borne d'enveloppe (25) comprend au moins deux éléments de borne (47, 48), dans laquelle une section du conducteur d'enveloppe (27) est enfermée entre les éléments de borne (47, 48), dans laquelle au moins l'un des éléments de borne (47, 48) est connecté à la borne de connexion (24), ou **en ce que** la borne d'enveloppe comprend un élément connecteur électriquement conducteur (49) avec une première portion de contact (50) connectée à la borne de connexion (24) et une deuxième portion de contact (51) connectée au conducteur d'enveloppe (27), dans laquelle au moins la deuxième portion de contact (51) est incorporée dans l'enveloppe (13).

11. Pale de rotor d'éolienne selon l'une des revendications 6 à 10, **caractérisée en ce que** la section d'enveloppe électriquement conductrice (18) est une poutre en carbone, une semelle de longeron en carbone, une section d'enveloppe à base de fibres de carbone et/ou un récepteur de foudre.

12. Pale de rotor d'éolienne selon l'une des revendications précédentes, **caractérisée en ce que** la borne d'âme (16) comprend au moins deux éléments de borne électriquement conducteurs (47, 48), dans laquelle une section d'extrémité du conducteur de paratonnerre (17) est enfermée entre les éléments de borne (47, 48) de la borne d'âme (16), ou **en ce que** la borne d'âme (16) comprend un élément connecteur électriquement conducteur (49) avec une première portion de contact (50) connectée au conducteur d'extrémité (19) et une deuxième portion de contact (51) connectée au conducteur de paratonnerre (17), dans laquelle au moins la deuxième portion de contact (51) est incorporée dans la structure d'âme (15).

13. Pale de rotor d'éolienne selon l'une des revendications précédentes, **caractérisée en ce que** la borne d'extrémité côté emplanture (8) comprend au moins un élément connecteur de borne (57) avec une surface de contact (61) connectée au conducteur d'extrémité (19), dans laquelle l'élément connecteur de borne d'extrémité (8) est agencé sur la surface interne (20) de l'enveloppe (13) ou au moins en partie incorporé dans l'enveloppe (13).

14. Éolienne comprenant au moins une pale de rotor d'éolienne (2) selon l'une des revendications précédentes.

15. Éolienne selon la revendication 14, dans laquelle la pale de rotor (2) est liée à un moyeu (3) de l'éolienne (1), dans laquelle la borne d'extrémité côté emplanture (8) de la pale de rotor (2) est connectée à un agencement à conducteur de paratonnerre supplémentaire (7) agencé au moins en partie dans le moyeu (3).
